(19)

Europäisches
Patentamt
European
Patent Office
Office européen
des brevets

(11) **EP 4 501 636 A2**

(12) **EUROPEAN PATENT APPLICATION**

(43) Date of publication:
**05.02.2025 Bulletin 2025/06**

(21) Application number: **24220915.3**

(22) Date of filing: **20.11.2015**

(51) International Patent Classification (IPC):
***B32B 27/32*** *(2006.01)*

(52) Cooperative Patent Classification (CPC):
**B32B 27/42; B32B 27/06; B32B 27/08;
B32B 27/18; B32B 27/302; B32B 27/304;
B32B 27/308; B32B 27/322;** B32B 2264/025;
B32B 2270/00; B32B 2274/00; B32B 2307/414;
B32B 2307/536; B32B 2307/54; B32B 2307/546;
(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2014 JP 2014238335**

(62) Document number(s) of the earlier application(s) in
accordance with Art. 76 EPC:
**20171476.3 / 3 730 297
18176948.0 / 3 398 772
15862637.4 / 3 225 394**

(71) Applicant: **Mitsubishi Chemical Corporation
Tokyo 100-8251 (JP)**

(72) Inventors:
• NAKAYA, Fuminori
Tokyo, 100-8251 (JP)
• SHOUJI, Keiko
Tokyo, 100-8251 (JP)

(74) Representative: **TBK
Bavariaring 4-6
80336 München (DE)**

Remarks:
This application was filed on 18-12-2024 as a
divisional application to the application mentioned
under INID code 62.

(54) **RESIN LAMINATE FILM, METHOD FOR MANUFACTURING SAME, AND MELAMINE
DECORATIVE PANEL**

(57) The present invention provides an acrylic resin
laminate film having excellent bonding properties, as well
as an excellent appearance and resistance to water
whitening. The present invention is a laminate film pro-
vided with a resin layer (I) comprising an acrylic resin
composition (A), and a second resin layer (II) comprising
a resin composition (C) that contains an acid anhydride
copolymer (C-1) and acrylic rubber particles (C-2).

**EP 4 501 636 A2**

**(Cont. next page)**

(52) Cooperative Patent Classification (CPC): (Cont.)
B32B 2307/71; B32B 2307/712; B32B 2307/732;
B32B 2307/748; B32B 2451/00; B32B 2607/00

## Description

TECHNICAL FIELD

The present invention relates to a resin laminate film, a method for manufacturing the same, and a melamine decorative panel.

The present application is based upon and claims the benefit of priority to Japanese Patent Application No. 2014-238335, filed November 26, 2014, and the contents of the application are incorporated herein by reference in their entirety.

BACKGROUND ART

Acrylic resin films are excellent in transparency and weather resistance and also have high surface hardness. Thus, for example, the acrylic resin films are bonded to various molded articles for indoor or outdoor use application such as optical components of electronic products, interior components of automobiles, signboards, and building materials, and are suitably used as films for protecting the surfaces. In addition, by subjecting the surfaces of the acrylic resin films to surface treatment such as antireflection treatment or antifouling treatment and then bonding the surface-treated acrylic resin films to molded articles, it is also possible to provide surface performance such as antireflection property or antifouling property to the molded articles.

In a case where these acrylic resin films for bonding are bonded to base materials which are poor in adhesiveness with acrylic resins, when an adhesive, a primer, or the like is used, the number of processes and time and effort are increased, which is not advantageous in terms of costs. For this reason, acrylic resin films to which adhesiveness is provided, for example, by introducing a reactive substituent to the acrylic resin films have been developed.

For example, Patent Literature 1 discloses a film which contains a polymer containing a monomer having a reactive substituent as a copolymer component and is excellent in adhesiveness. In addition, Patent Literatures 2 and 3 disclose an acrylic resin film which is formed by a polymer having acid anhydride.

CITATION LIST

PATENT LITERATURE

Patent Literature 1: JP 2007-506574 A
Patent Literature 2: JP 2009-196151 A
Patent Literature 3: JP 2013-231169 A

SUMMARY OF THE INVENTION

PROBLEM TO BE SOLVED BY THE INVENTION

However, in a case where the reactive substituent is introduced in order to provide adhesiveness with the base material, the water whitening resistance and the appearance of the acrylic resin film are not sufficient in some cases. In addition, when the water whitening resistance and the appearance are intended to be improved, adhesiveness is not sufficient in some cases. In this regard, an object of the invention is to provide an acrylic resin laminate film which is excellent in bondability, water whitening resistance, and appearance.

MEANS FOR SOLVING PROBLEM

The present inventors have conducted intensive studies, and as a result, have found that the above-described object can be achieved by combining two kinds of resin layers each having a specific composition, and the invention has been completed accordingly.

That is, the invention has the following features [1] to [17].

[1] A laminate film including: a resin layer (I) which is formed from an acrylic resin composition (A) or a fluororesin composition (B); and a resin layer (II) which is formed from a resin composition (C) containing an acid anhydride copolymer (C-1) and acrylic rubber particles (C-2).
[2] The laminate film described in [1], in which a content of a monomer unit having an acid anhydride structure in the copolymer (C-1) is 4% by mass or more with respect to 100% by mass of the resin composition (C).

[3] The laminate film described in [1] or [2], in which a glass transition temperature of the resin composition (C) is 50 to 105°C.

[4] The laminate film described in any one of [1] to [3], in which an average particle diameter of the acrylic rubber particles (C-2) is 0.15 $\mu$m or more.

[5] The laminate film described in any one of [1] to [4], in which a thickness of the laminate film is 40 $\mu$m or less.

[6] The laminate film described in any one of [1] to [5], in which the laminate film contains a triazine-based ultraviolet absorbing agent.

[7] The laminate film described in any one of [1] to [6], in which the resin layer (I) contains a release agent.

[8] The laminate film described in any one of [1] to [7], in which a storage elastic modulus at 100°C of the resin layer (I) is 1 to 500 MPa.

[9] The laminate film described in any one of [1] to [8], in which a gel fraction of the resin layer (II) is 5 to 30%.

[10] The laminate film described in any one of [1] to [8], in which a gel fraction of the resin layer (II) is 45 to 80%.

[11] The laminate film described in any one of [1] to [10], in which a thickness of the resin layer (II) is 1 to 4 $\mu$m.

[12] The laminate film described in any one of [1] to [11], in which the resin layer (I) contains a fluororesin.

[13] The laminate film described in any one of [1] to [12], in which a thickness of the resin layer (I) is 1 to 4 $\mu$m.

[14] The laminate film described in any one of [1] to [13], in which a content of a fluororesin in the fluororesin composition (B) forming the resin layer (I) is 60 to 95% with respect to 100% by mass of the fluororesin composition.

[15] A protection film including the laminate film described in any one of [1] to [14].

[16] A melamine decorative panel surface protection film including the laminate film described in any one of [1] to [14].

[17] A melamine decorative panel including the laminate film described in any one of [1] to [14] and a melamine base material laminated in order of the resin layer (I), the resin layer (II), and the melamine base material.

EFFECT OF THE INVENTION

According to the invention, it is possible to provide a laminate film which is excellent in bondability, water whitening resistance, and appearance.

MODE(S) FOR CARRYING OUT THE INVENTION

[Laminate Film]

A laminate film of the invention includes a resin layer (I) which is formed from an acrylic resin composition (A) or a fluororesin composition (B) and a resin layer (II) which is formed from a resin composition (C) containing an acid anhydride copolymer (C-1) and acrylic rubber particles (C-2).

Herein, the resin composition (C) forming the resin layer (II) has an acid anhydride group for exhibiting adhesiveness with a base material. For this reason, in the case of use application of bonding the laminate film according to invention, it is preferable that the resin layer (II) formed from the resin composition (C) is used as a bonding layer while facing an adherend side and the resin layer (I) formed from the acrylic resin composition (A) or the fluororesin composition (B) is used as a surface layer while opposing to the adherend.

[Resin Layer (I)]

The resin layer (I) of the invention is formed from the acrylic resin composition (A) or the fluororesin composition (B).

The resin layer (I) preferably contains a release agent. Specifically, it is realized by selecting a release agent as an additive (D-1) or (D-2) to be described later. The type and the amount of the release agent will be described later.

The storage elastic modulus at 100°C of the resin layer (I) is preferably 1 MPa or more and 500 MPa or less. The storage elastic modulus at 100°C of the resin layer (I) is more preferably 10 MPa or more and 200 MPa or less, and further preferably 30 MPa or more and 100 MPa or less.

When the storage elastic modulus at 100°C is 1 MPa or more, the heat resistance of a laminate plate becomes favorable, and when the storage elastic modulus at 100°C is 500 MPa or less, the transferability of an embossed shape becomes favorable when the embossed shape is transferred by heat pressing. Thus, a laminate plate with favorable appearance can be produced.

The melamine decorative panel is generally produced by heat pressing at a temperature of 160°C or higher. However, when a large number of large-area laminate plates are simultaneously laminated and subjected to pressing, unevenness in temperature may occur depending on portions and a low-temperature portion around 100°C may occur. Even in this case, when the storage elastic modulus at 100°C is 500 MPa or less, a laminate plate with favorable appearance can be obtained.

[Acrylic Resin Composition (A)]

The acrylic resin composition (A) of the invention preferably contains acrylic rubber particles (A-1) from the viewpoint of film productivity and handleability, and for example, can contain the acrylic rubber particles (A-1), a thermoplastic polymer (A-2), and an additive (D-1). In particular, it is preferable that the acrylic resin composition (A) contains 5.5% by mass or more and 100% by mass or less of (A-1) and 0% by mass or more and 94.5% by mass or less of (A-2) with respect to the total 100% by mass of (A-1) and (A-2), and further contains 0 part by mass or more and 20 parts by mass or less of the additive (D-1) with respect to the total 100 parts by mass of (A-1) and (A-2).

When the content of the acrylic rubber particles (A-1) is 5.5% by mass or more, toughness is further provided to the resin layer (I), cutting of the film is less likely to occur at the time of acrylic resin laminate film production, and productivity is favorable. In addition, handleability is favorable at the time of using an acrylic resin laminate film. The acrylic resin composition (A) more preferably contains 10% by mass or more and 100% by mass or less of (A-1) and 0% by mass or more and 90% by mass or less of (A-2) with respect to the total 100% by mass of (A-1) and (A-2), and further preferably contains 15% by mass or more and 100% by mass or less of (A-1) and 0% by mass or more and 85% by mass or less of (A-2). In addition, the acrylic resin composition (A) more preferably contains 0.1 part by mass or more and 10 parts by mass or less of the additive (D-1) with respect to the total 100 parts by mass of (A-1) and (A-2), and further preferably contains 1 part by mass or more and 8 parts by mass or less of the additive (D-1). Incidentally, the acrylic resin composition (A) may not contain the thermoplastic polymer (A-2) and the additive (D-1).

[Acrylic Rubber Particles (A-1)]

The acrylic rubber particles (A-1) are not particularly limited as long as they are particles containing an acrylic resin. However, the acrylic rubber particles (A-1) are preferably acrylic rubber particles having a multi-layered structure of two or more layers in which a layer containing a rigid polymer (a-2) as an outer layer is formed on a layer containing an elastic copolymer (a-1) as an inner layer.

In particular, the acrylic rubber particles (A-1) are preferably acrylic rubber particles having a multi-layered structure of two or more layers in which a layer containing the rigid polymer (a-2) as an outer layer having a structure of one layer or two or more layers which is obtained by craft polymerization of a monomer having methacrylic acid alkyl ester as a main component is formed on a layer containing the elastic copolymer (a-1) as an inner layer having a structure of one layer or two or more layers which is obtained by using (meth)acrylic acid alkyl ester as a main component.

In addition, the acrylic rubber particles (A-1) may include one or more layers containing an intermediate polymer (a-3) between the layer containing the elastic copolymer (a-1) and the layer containing the rigid polymer (a-2).

The content of the elastic copolymer (a-1) in the acrylic rubber particles (A-1) is preferably 10% by mass or more and 90% by mass or less, and more preferably 20% by mass or more and 70% by mass or less. The content of the rigid polymer (a-2) in the acrylic rubber particles (A-1) is preferably 10% by mass or more and 90% by mass or less, and more preferably 30% by mass or more and 70% by mass or less. The content of the intermediate polymer (a-3) in the acrylic rubber particles (A-1) is 0% by mass or more and 35% by mass or less, and more preferably 0% by mass or more and 20% by mass or less. Further, in a case where the content thereof is 35% by mass or less, the balance of a final polymer is favorable.

The elastic copolymer (a-1) is preferably a polymer obtained by polymerizing a monomer composition containing (meth)acrylic acid alkyl ester. Incidentally, (meth)acrylic acid represents either acrylic acid or methacrylic acid. The elastic copolymer (a-1) is more preferably a polymer obtained by polymerizing a monomer composition containing acrylic acid alkyl ester.

The monomer composition may further contain a monomer other than (meth)acrylic acid alkyl ester and a crosslinkable monomer. For example, the elastic copolymer (a-1) can contain 80% by mass or more and 100% by mass or less of acrylic acid alkyl ester having an alkyl group with 1 to 8 carbon atoms and methacrylic acid alkyl ester having an alkyl group with 1 to 4 carbon atoms, 0% by mass or more and 20% by mass or less of the monomer other than (meth)acrylic acid alkyl ester, and 0% by mass or more and 10% by mass or less of the crosslinkable monomer (100% by mass in total).

As the acrylic acid alkyl ester having an alkyl group with 1 to 8 carbon atoms, for example, methyl acrylate, ethyl acrylate, propyl acrylate, butyl acrylate, 2-ethylhexyl acrylate, and n-octyl acrylate are preferable, and acrylic acid alkyl ester having a low Tg is more preferable. They may be used either singly or in combination of two or more kinds.

The acrylic acid alkyl ester is used as a main component of a monomer forming the elastic copolymer (a-1). Specifically, the used amount of the acrylic acid alkyl ester is preferably 30% by mass or more and 99.9% by mass or less with respect to the entire monomer forming the elastic copolymer (a-1). In a case where the used amount thereof is 30% by mass or more, formability of the film is favorable. The used amount thereof is more preferably 50% by mass or more and 95% by mass or less.

Incidentally, in a case where the elastic copolymer (a-1) has a structure of two or more layers, the range of the used amount represents the used amount of the acrylic acid alkyl ester as a whole of the elastic copolymer (a-1). For example, in a case where the elastic copolymer (a-1) has a hard core structure, the used amount of acrylic acid alkyl ester in the first layer (core portion) can also be set to be less than 30% by mass.

Examples of methacrylic acid alkyl ester having an alkyl group with 1 to 4 carbon atoms include methyl methacrylate, ethyl methacrylate, propyl methacrylate, and butyl methacrylate. They may be used either singly or in combination of two or more kinds. The used amount of methacrylic acid alkyl ester is preferably 0% by mass or more and 69.9% by mass or less, and more preferably 0% by mass or more and 40% by mass or less with respect to the entire monomer forming the elastic copolymer (a-1).

As the monomer other than (meth)acrylic acid alkyl ester, another vinyl monomer which is copolymerizable with the (meth)acrylic acid alkyl ester is mentioned. As the monomer other than (meth)acrylic acid alkyl ester, for example, styrene and acrylonitrile are mentioned. They may be used either singly or in combination of two or more kinds. In the case of using the monomer other than (meth)acrylic acid alkyl ester, the used amount thereof is preferably 0% by mass or more and 69.9% by mass or less, and more preferably 0% by mass or more and 20% by mass or less with respect to the entire monomer forming the elastic copolymer (a-1).

Examples of the crosslinkable monomer include ethylene glycol dimethacrylate, 1,3-butylene glycol dimethacrylate, 1,4-butylene glycol dimethacrylate, propylene glycol dimethacrylate, and a graft linking agent. They may be used either singly or in combination of two or more kinds. The used amount of the crosslinkable monomer is preferably 0.1% by mass or more and 10% by mass or less, and more preferably 0.5% by mass or more and 5% by mass or less with respect to the entire monomer forming the elastic copolymer (a-1). A graft linking agent is preferably used as a crosslinkable monomer in terms of stability of the acrylic rubber particles (A-1).

Examples of the graft linking agent include an allyl ester, methallyl ester, or crotyl ester of $\alpha,\beta$-unsaturated carboxylic acid or unsaturated dicarboxylic acid; triallyl cyanurate, and triallyl isocyanurate. Among these, an allyl ester of acrylic acid, methacrylic acid, maleic acid, fumaric acid, or the like is preferable, and allyl methacrylate is more preferable since it has an excellent effect.

In such a graft linking agent, mainly, a conjugated unsaturated bond of its ester reacts quicker by far than an allyl group, a methallyl group, or a crotyl group to chemically bond. Then, most part of the allyl group, methallyl group, or crotyl group quickly reacting effectively acts during polymerization of the next layer polymer to provide a grafting bond between adjacent two layers.

The rigid polymer (a-2) is preferably a polymer obtained by polymerizing methacrylic acid alkyl ester, acrylic acid alkyl ester, and a monomer other than (meth)acrylic acid alkyl ester. For example, the rigid polymer (a-2) is obtained by polymerizing a monomer formed from 51% by mass or more and 100% by mass or less of methacrylic acid alkyl ester having an alkyl group with 1 to 4 carbon atoms, and 0% by mass or more and 49% by mass or less of acrylic acid alkyl ester having an alkyl group with 1 to 8 carbon atoms or a monomer other than (meth)acrylic acid alkyl ester in the presence of the elastic copolymer (a-1). As methacrylic acid alkyl ester having an alkyl group with 1 to 4 carbon atoms, acrylic acid alkyl ester having an alkyl group with 1 to 8 carbon atoms, and the monomer other than (meth)acrylic acid alkyl ester, the same monomers as the monomers used in polymerization of the elastic copolymer (a-1) can be used.

As the intermediate polymer (a-3), a polymer obtained by polymerizing a monomer composition containing acrylic acid alkyl ester, methacrylic acid alkyl ester, a monomer other than (meth)acrylic acid alkyl ester, and a crosslinkable monomer is preferable. As the intermediate polymer (a-3), a polymer obtained by polymerizing a monomer composition containing acrylic acid alkyl ester having an alkyl group with 1 to 8 carbon atoms, methacrylic acid alkyl ester having an alkyl group with 1 to 4 carbon atoms, a monomer other than (meth)acrylic acid alkyl ester, and a crosslinkable monomer is more preferable. For example, the intermediate polymer (a-3) can contain 10% by mass or more and 90% by mass or less of acrylic acid alkyl ester having an alkyl group with 1 to 8 carbon atoms, 90% by mass or more and 10% by mass or less of methacrylic acid alkyl ester having an alkyl group with 1 to 4 carbon atoms, 0% by mass or more and 20% by mass or less of the monomer other than (meth)acrylic acid alkyl ester, and 0% by mass or more and 10% by mass or less of the crosslinkable monomer (100% by mass in total).

The same monomers as the monomers used in polymerization of the elastic copolymer (a-1) can be used as each monomer used in the intermediate polymer (a-3). In addition, the content (monomer component ratio) of acrylic acid alkyl ester in the intermediate polymer (a-3) is preferably lower than the content of acrylic acid alkyl ester in the elastic copolymer (a-1) and higher than the content of acrylic acid alkyl ester in the rigid polymer (a-2).

The average particle diameter of the acrylic rubber particles (A-1) is preferably 0.01 $\mu$m or more and 0.5 $\mu$m or less, and more preferably 0.08 $\mu$m or more and 0.3 $\mu$m or less. Particularly, from the viewpoint of film formability, the average particle diameter thereof is preferably 0.08 $\mu$m or more. Incidentally, the average particle diameter is a value measured by a method to be described later.

A method for producing the acrylic rubber particles (A-1) is not particularly limited. As methods for producing the elastic copolymer (a-1) and the rigid polymer (a-2), for example, an emulsion polymerization method can be used. In addition, the elastic copolymer (a-1) and the rigid polymer (a-2) can also be produced by emulsifying suspension polymerization which includes converting an emulsion polymerization system into a suspension polymerization system at the time of polymerizing a polymer forming the outermost layer after emulsion polymerization. The polymerization temperature is appropriately selected depending on the kind and amount of a polymerization initiator to be used, but is preferably 40°C or higher and 120°C or lower, and more preferably 60°C or higher and 95°C or lower. As the polymerization initiator, known polymerization initiators can be used. The polymerization initiator can be added to either or both of the aqueous phase and the monomer phase.

Examples of an emulsifier which can be used in the emulsion polymerization method include anionic, cationic, and nonionic surfactants, but anionic surfactants are preferable. Examples of the anionic surfactants include a carboxylate surfactant such as potassium oleate, sodium stearate, sodium myristate, sodium N-lauroylsarcosinate, or dipotassium alkenylsuccinate; a sulfuric acid ester salt-based surfactant such as sodium laurylsulfate; a sulfonate surfactant such as sodium dioctylsulfosuccinate, sodium dodecylbenzenesulfonate, or sodium alkyl diphenyl ether disulfonate; and a phosphoric acid ester salt-based surfactant such as sodium polyoxyethylene alkyl phenyl ether phosphate. They may be used either singly or in combination of two or more kinds.

The polymer latex obtained by emulsion polymerization can be filtered, for example, by a filter having a mesh of 100 μm or less, and then separated and recovered by a method such as an acid solidification method, a salt solidification method, a freeze solidification method, or a spray drying method. In the acid solidification method, an inorganic acid such as sulfuric acid, hydrochloric acid, or phosphoric acid or an organic acid such as acetic acid can be used. In the salt solidification method, an inorganic salt such as sodium sulfate, magnesium sulfate, aluminum sulfate, or calcium chloride or an organic salt such as calcium acetate or magnesium acetate can be used. They may be used either singly or in combination of two or more kinds. The acrylic rubber particles (A-1) are obtained by further washing, dehydrating, drying, or the like the separated and recovered polymer.

[Thermoplastic Polymer (A-2)]

The thermoplastic polymer (A-2) is a thermoplastic polymer other than the acrylic rubber particles (A-1) and is preferably a polymer obtained by using methacrylic acid alkyl ester as a main component. The thermoplastic polymer (A-2) is more preferably a polymer obtained by polymerizing methacrylic acid alkyl ester, acrylic acid alkyl ester, and a monomer other than (meth)acrylic acid alkyl ester. For example, as the thermoplastic polymer (A-2), it is possible to use a polymer obtained by polymerizing 50% by mass or more and 99.9% by mass or less of methacrylic acid alkyl ester having an alkyl group with 1 to 4 carbon atoms, 0.1% by mass or more and 50% by mass or less of acrylic acid alkyl ester, and 0% by mass or more and 49.9% by mass or less of a monomer other than (meth)acrylic acid alkyl ester (100% by mass in total).

Examples of the methacrylic acid alkyl ester include methyl methacrylate, ethyl methacrylate, and butyl methacrylate. Among these, methyl methacrylate is preferable. They may be used either singly or in combination of two or more kinds.

Examples of the acrylic acid alkyl ester include methyl acrylate, ethyl acrylate, and butyl acrylate. They may be used either singly or in combination of two or more kinds.

Examples of the monomer other than (meth)acrylic acid alkyl ester include an aromatic vinyl monomer such as styrene; a vinyl cyanide monomer such as acrylonitrile; N-phenylmaleimide; and N-cyclohexylmaleimide. They may be used either singly or in combination of two or more kinds.

A method for producing the thermoplastic polymer (A-2) is not particularly limited, and for example, various polymerization methods such as suspension polymerization, emulsion polymerization, and bulk polymerization can be used. A chain transfer agent, another polymerization aid, and the like may be used at the time of polymerization. The chain transfer agent is not particularly limited, but is preferably mercaptans.

The mass average molecular weight of the thermoplastic polymer (A-2) is preferably 300,000 or less from the viewpoint of occurring an appropriate elongation at the time of melting a film raw material resin and having favorable film formability. In addition, the mass average molecular weight thereof is preferably 10,000 or more from the viewpoint that cutting of the film is less likely to occur at the time of film formation and film handling in order not to make the film brittle. Incidentally, the mass average molecular weight is a value measured by a method to be described later.

[Additive (D-1)]

The additive (D-1) is a compound other than the acrylic rubber particles (A-1) and the thermoplastic polymer (A-2), and examples thereof include a stabilizer, a lubricant, a processing aid, a plasticizer, an impact resistance improver, a foaming agent, a filler, a colorant, and an ultraviolet absorbing agent.

Among these, as the additive (D-1), from the viewpoint of securing the film formability, a processing aid is preferable. The processing aid is not particularly limited, but a processing aid formed from a thermoplastic polymer is preferable and a polymer obtained by polymerizing methyl methacrylate and a monomer other than methyl methacrylate is more preferable.

As the processing aid, for example, a polymer obtained by polymerizing 50% by mass or more and 100% by mass or less of methyl methacrylate and 0% by mass or more and 50% by mass or less of a monomer other than methyl methacrylate (100% by mass in total) can be used. Since the film formability is improved by using the processing aid, the processing aid is particularly effective in a case where thickness accuracy or film formation speed needs to be at a high level.

The mass average molecular weight of the processing aid formed from a thermoplastic polymer is, from the viewpoint of obtaining a film with favorable thickness accuracy, preferably 400,000 or more, more preferably 500,000 or more and 5,000,000 or less, and further preferably 700,000 or more and 2,000,000 or less. Incidentally, the mass average molecular weight is a value obtained by a method to be described later.

Examples of the monomer other than methyl methacrylate include acrylic acid alkyl ester, methacrylic acid alkyl ester other than methyl methacrylate, an aromatic vinyl monomer, and a vinyl cyanide monomer. They may be used either singly or in combination of two or more kinds.

As a method for producing the processing aid formed from a thermoplastic polymer, an emulsion polymerization method is preferable. The processing aid formed from a thermoplastic polymer can be obtained, for example, by separating and recovering a polymer latex, which is produced by an emulsion polymerization method, with various coagulating agents, or separating and recovering a solid content by spray drying.

The used amount of the processing aid is preferably 0 part by mass or more and 20 parts by mass or less with respect to the total 100 parts by mass of the acrylic rubber particles (A-1) and the thermoplastic polymer (A-2). When the used amount thereof is 20 parts by mass or less, the viscosity of the acrylic resin composition (A) becomes suitable so as to obtain favorable film formability.

Further, from the viewpoint of providing weather resistance in order to protect the base material, the additive (D-1) is preferably an ultraviolet absorbing agent.

The molecular weight of the ultraviolet absorbing agent is preferably 300 or more and more preferably 400 or more. In a case where the molecular weight thereof is 300 or more, the ultraviolet absorbing agent is less likely to volatile when vacuum molding or pressure molding is performed in an injection molding mold, and the mold is less likely to be contaminated. The type of the ultraviolet absorbing agent is not particularly limited, but a benzotriazole-based ultraviolet absorbing agent having a molecular weight of 400 or more and a triazine-based ultraviolet absorbing agent having a molecular weight of 400 or more are preferable.

Examples of a commercially available product as the benzotriazole-based ultraviolet absorbing agent having a molecular weight of 400 or more include "Tinuvin 234" (trade name, manufactured by Ciba-Geigy) and "ADK STAB LA-31" (trade name, manufactured by ADEKA CORPORATION). Examples of a commercially available product as the triazine-based ultraviolet absorbing agent having a molecular weight of 400 or more include "Tinuvin 1577" (trade name, manufactured by Ciba-Geigy). They may be used either singly or in combination of two or more kinds. The added amount of the ultraviolet absorbing agent is preferably 0 part by mass or more and 20 parts by mass or less, and more preferably 1 part by mass or more and 5 parts by mass or less with respect to the total 100 parts by mass of the acrylic rubber particles (A-1) and the thermoplastic polymer (A-2) from the viewpoint of weather resistance.

In addition, from the viewpoint of further improving weather resistance, a radical scavenger such as a hindered amine-based light stabilizer is preferably used together with the ultraviolet absorbing agent. Examples of a commercially available product as the radical scavenger include "ADK STAB LA-57", "ADK STAB LA-62", "ADK STAB LA-67", "ADK STAB LA-63", and "ADK STAB LA-68" (all trade name, manufactured by ADEKA CORPORATION); and "SANOL LS-770", "SANOL LS-765", "SANOL LS-292", "SANOL LS-2626", "SANOL LS-1114", and "SANOL LS-744" (all trade name, manufactured by Sankyo Life Tech Co., Ltd.). They may be used either singly or in combination of two or more kinds. The added amount of the radical scavenger is preferably 0 part by mass or more and 10 parts by mass or less, and more preferably 0.2 part by mass or more and 5 parts by mass or less with respect to the total 100 parts by mass of the acrylic rubber particles (A-1) and the thermoplastic polymer (A-2) from the viewpoint of bleeding-out resistance.

Further, from the viewpoint of preventing adhesion with the press plate when the laminate plate is produced by pressing, the additive (D-1) is preferably a release agent.

Examples of the release agent include a silicone-based compound, a fluorine-based compound, alkyl alcohol, and alkylcarboxylic acid. Among these, in terms of availability and economic efficiency, alkylcarboxylic acid is preferable.

Examples of the alkylcarboxylic acid which is used as the release agent include linoleic acid, vaccenic acid, stearic acid, oleic acid, margaric acid, palmitoleic acid, palmitic acid, and pentadecylic acid. They may be used either singly or in combination of two or more kinds.

From the viewpoint of preventing adhesion with the press plate, the added amount of the release agent is preferably 0.01 part by mass or more and 2 parts by mass or less, and more preferably 0.1 part by mass or more and 0.5 part by mass or less with respect to the total 100 parts by mass of the acrylic rubber particles (A-1) and the thermoplastic polymer (A-2).

[Fluororesin Composition (B)]

The fluororesin composition (B) of the invention can contain a fluororesin (B-1), a thermoplastic polymer (B-2), and an additive (D-2).

The fluororesin composition (B) contains 60% by mass or more and 95% by mass or less of (B-1) and 5% by mass or more and 40% by mass or less of (B-2) with respect to the total 100% by mass of (B-1) and (B-2), and further, preferably contains 0 part by mass or more and 20 parts by mass or less of the additive (D-2) with respect to the total 100 parts by mass of (B-1) and (B-2).

When the content of the fluororesin (B-1) is 60% by mass or more, chemical resistance is provided to the resin layer (I) so that chemical resistance of the laminate film and a molded article obtained by laminating the laminate film becomes favorable.

When the content of the thermoplastic polymer (B-2) is 40% by mass or less, chemical resistance is provided to the resin layer (I) so that chemical resistance of the laminate film and the molded article obtained by laminating the laminate film becomes favorable.

From the viewpoint of chemical resistance, it is preferable that the content of the fluororesin (B-1) is higher. On the other hand, in a case where a crystalline polymer such as polyvinylidene fluoride is used in (B-1), there is a possibility that curling occurs in the laminate film due to crystallization shrinkage or a difference in thermal shrinkage rate with the resin layer (II) and thus a problem arises in handleability. In this case, by adding (B-2), curling is suppressed so that handleability of the laminate film can be made favorable. From the viewpoint of curling suppression, it is preferable that the content of (B-2) is higher.

In addition, in a case where a relatively soft resin such as polyvinylidene fluoride is used in (B-1) and a relatively hard resin such as polymethyl methacrylate is used in (B-2), by adding (B-2), the surface hardness is increased to improve scratch resistance. From the viewpoint of scratch resistance, it is preferable that the content of (B-2) is higher. Further, in a case where a crystalline polymer such as polyvinylidene fluoride is used in (B-1), there is a possibility that a decrease in optical characteristics, such as a decrease in film transparency, an increase in haze value, and an increase in yellowness occurs. In this case, by adding (B-2), crystallinity is lowered or the crystal size is finely decreased so that the optical characteristics can be improved.

From the viewpoint of chemical resistance, the fluororesin composition (B) more preferably contains 70% by mass or more and 95% by mass or less of (B-1) and 5% by mass or more and 30% by mass or less of (B-2) with respect to the total 100% by mass of (B-1) and (B-2).

From the viewpoint of curling, the fluororesin composition (B) more preferably contains 60% by mass or more and 95% by mass or less of (B-1) and 5% by mass or more and 40% by mass or less of (B-2) with respect to the total 100% by mass of (B-1) and (B-2), and further preferably contains 60% by mass or more and 85% by mass or less of (B-1) and 15% by mass or more and 40% by mass or less of (B-2). When the content of (B-2) is 5% by mass or more, curling is suppressed to make the handleability of the laminate film favorable.

From the viewpoint of scratch resistance, the fluororesin composition (B) more preferably contains 50% by mass or more and 90% by mass or less of (B-1) and 10% by mass or more and 50% by mass or less of (B-2) with respect to the total 100% by mass of (B-1) and (B-2), and further preferably contains 50% by mass or more and 75% by mass or less of (B-1) and 25% by mass or more and 50% by mass or less of (B-2).

Further, the fluororesin composition (B) more preferably contains 0 part by mass or more and 10 parts by mass or less of the additive (D-2) and further preferably 0 part by mass or more and 3 parts by mass or less of the additive (D-2) with respect to the total 100 parts by mass of (B-1) and (B-2). Incidentally, the fluororesin composition (B) may not contain the thermoplastic polymer (B-2) and the additive (D-2).

[Fluororesin (B-1)]

The fluororesin (B-1) is not particularly limited as long as it is a homopolymer or copolymer of a monomer having a fluorine substituent, and may contain a non-fluoropolymer such as ethylene.

Examples of the monomer having a fluorine substituent include perfluoroalkyl vinyl ether such as vinyl fluoride, vinylidene fluoride, trifluoroethylene, chlorotrifluoroethylene, 1,2-difluoroethylene, tetrafluoroethylene, hexafluoropropylene, perfluoro(methyl vinyl ether), perfluoro(ethyl vinyl ether), or perfluoro(propyl vinyl ether); fluoroalkyl methacrylate such as perfluoro(1,3-dioxole), perfluoro(2,2-dimethyl-1,3-dioxole), perfluorobutylethylene, 3,3,3-trifluoropropene, or trifluoroethyl methacrylate; and fluoroalkyl acrylate such as trifluoroethyl acrylate.

From the viewpoint of chemical resistance and availability, the fluororesin (B-1) is preferably a homopolymer or copolymer of vinylidene fluoride and more preferably a vinylidene fluoride homopolymer. Specific examples thereof include "KYNAR 720" (trade name, manufactured by Arkema Inc.), "KYNAR 740" (trade name, manufactured by Arkema Inc.), "KF Polymer T#850" (trade name, manufactured by KUREHA CORPORATION), "KF Polymer T#1000" (trade name, manufactured by KUREHA CORPORATION), and "KF Polymer T#1100" (trade name, manufactured by KUREHA CORPORATION). All of those examples are a vinylidene fluoride homopolymer.

Regarding the melt viscosity of the fluororesin (B-1), from the viewpoint of easiness in melt molding, the MFR of the fluororesin (B-1) as measured at 230°C and 5 kg according to ASTM D1238 is preferably 5 g/10 min or more and 50 g/10 min or less, and more preferably 10 g/10 min or more and 30 g/10 min or less. Specifically, "KYNAR 720" (trade name, manufactured by Arkema Inc.) and "KF Polymer T#850" (trade name, manufactured by KUREHA CORPORATION) are exemplified.

The mass average molecular weight of the fluororesin (B-1) is preferably 100,000 or more and 500,000 or less. Incidentally, the mass average molecular weight is a value measured in a dimethyl formamide solution by a method to be described later.

[Thermoplastic Polymer (B-2)]

The thermoplastic polymer (B-2) is a thermoplastic polymer other than the fluororesin (B-1), and the same thermoplastic polymer as the thermoplastic polymer (A-2) is exemplified.

[Additive (D-2)]

As the additive (D-2), the same additive as the additive (D-1) used in preparation of the acrylic resin composition (A) can be used as long as the additive (D-2) is a compound other than the fluororesin (B-1) and the thermoplastic polymer (B-2).

However, the fluororesin may have poor compatibility with various additives and there is a possibility that this results in deterioration of appearance. Thus, the added amount thereof may be 0. In particular, since the hindered amine-based radical scavenger may be colored by reaction with the fluororesin (B-1), the added amount thereof may be 0.

[Resin Layer (II)]

The resin layer (II) of the invention is formed from the resin composition (C) containing an acid anhydride copolymer (C-1) and acrylic rubber particles (C-2).

[Resin Composition (C)]

The resin composition (C) of the invention contains 10% by mass or more and 99% by mass or less of the acid anhydride copolymer (C-1) and 1% by mass or more and 90% by mass or less of the acrylic rubber particles (C-2) with respect to the total 100% by mass of (C-1) and (C-2), and further contains 0 part by mass or more and 50 parts by mass or less of an additive (D-3) other than (C-1) and (C-2) with respect to the total 100 parts by mass of (C-1) and (C-2).

The acid anhydride copolymer (C-1) contains a monomer unit having an acid anhydride structure, and the content of the monomer unit having an acid anhydride structure is 4% by mass or more with respect to 100% by mass of the resin composition (C).

The resin composition (C) preferably contains 20% by mass or more and 95% by mass or less of (C-1) and 5% by mass or more and 80% by mass or less of (C-2), and more preferably contains 30% by mass or more and 80% by mass or less of (C-1) and 20% by mass or more and 70% by mass or less of (C-2) with respect to the total 100% by mass of (C-1) and (C-2). In addition, the resin composition (C) preferably contains 0 part by mass or more and 10 parts by mass or less of the additive (D-3), and more preferably contains 0.1 part by mass or more and 5 parts by mass or less of the additive (D-3) with respect to the total 100 parts by mass of (C-1) and (C-2).

From the viewpoint of adhesiveness, it is preferable to contain a larger amount of (C-1) and (C-2). As the content of (C-1) is increased, the content of the acid anhydride group is increased so as to improve adhesiveness. In addition, as the content of (C-2) is increased, breakage inside the acrylic resin layer (II) is suppressed so as to improve adhesiveness. From the viewpoint of film handleability, it is preferable to contain a larger amount of (C-2). As the content of (C-2) is increased, the toughness of the acrylic resin layer (II) is improved so as to make the handleability of the laminate film favorable. From the viewpoint of scratch resistance, it is preferable to contain a smaller amount of (C-2). As the content of (C-2) is decreased, pencil hardness is increased so as to improve scratch resistance. In addition, from the viewpoint of film appearance, it is preferable to contain a smaller amount of (C-2). As the content of (C-2) is decreased, generation of a gelled product caused by thermal deterioration at the time of melt molding is suppressed, a foreign matter is decreased, and thus the film appearance becomes favorable.

The glass transition temperature (Tg) of the resin composition (C) is preferably 50°C or higher and 105°C or lower, and more preferably 70°C or higher and 100°C or lower.

In a case where the Tg is 50°C or higher, the adhesion of films at the time of manufacturing or handling can be prevented so as to make workability favorable. In addition, the heat resistance of the melamine decorative panel using the laminate film according to the invention is favorable. Further, in a case where the Tg is 105°C or lower, the adhesiveness with the melamine base material becomes more favorable.

The gel fraction of the resin composition (C) is preferably 5% or more and 80% or less. As the gel fraction is increased, the toughness of the film is improved so that the handleability of the film and film formability are improved. In addition, as the gel fraction is decreased, generation of a thermally deteriorated foreign matter of the resin is suppressed so as to make film appearance favorable. When the gel fraction thereof is 5% or more and 80% or less, a balance between film toughness and film appearance can be achieved. From the viewpoint of film toughness, the gel fraction is more preferably 45% or more and 80% or less, and further preferably 50% or more and 80% or less. In addition, from the viewpoint of film appearance, the gel fraction is more preferably 5% or more and 30% or less, and further preferably 5% or more and 25% or less.

[Acid Anhydride Copolymer (C-1)]

The acid anhydride copolymer (C-1) can contain a monomer unit having an acid anhydride group, an aromatic vinyl monomer unit, and another monomer unit. Specifically, the acid anhydride copolymer (C-1) can contain 2% by mass or more and 50% by mass or less of the monomer unit having an acid anhydride group, 2% by mass or more and 98% by mass or less of the aromatic vinyl monomer unit, and 0% by mass or more and 96% by mass or less of the other monomer unit (100% by mass in total).

Since the acid anhydride structure of the acid anhydride copolymer (C-1) reacts with an amino group or methylol group to form a bond, the acid anhydride copolymer (C-1) can be attached to the melamine decorative panel by performing heat reaction in a state of being contacted with a material containing methylol melamine and a derivative thereof, specifically, a melamine resin or a precursor thereof of the melamine decorative panel.

Examples of the monomer having an acid anhydride group include unsaturated dicarboxylic anhydrides such as maleic anhydride, itaconic anhydride, ethyl maleic anhydride, methyl itaconic anhydride, and chloro maleic anhydride. Among the above examples, from the viewpoint of heat degradation resistance, chromaticity, and availability, maleic anhydride is preferable.

The acid anhydride copolymer (C-1) may have one kind of these acid anhydride groups or two or more kinds thereof.

The reaction temperature of the acid anhydride group varies depending on the presence of a catalyst, a pH value, or the like, but is preferably 50°C or higher and 200°C or lower, and more preferably 100°C or higher and 170°C or lower. Since the melamine decorative panel is produced generally at a temperature of 100°C or higher and 170°C or lower, when the reaction temperature is 100°C or higher and 170°C or lower, it is possible to sufficiently attach the laminate film according to the invention to the melamine base material at the same time of manufacturing the melamine decorative panel by laminating the laminate film according to the invention and the melamine base material and then heating them.

The content of the monomer unit having an acid anhydride group is preferably 2% by mass or more and 50% by mass or less with respect to the acid anhydride copolymer (C-1). In addition, from the viewpoint of adhesiveness and coloration prevention, the content thereof is more preferably 3% by mass or more and 30% by mass or less. In a case where the content thereof is 2% by mass or more, adhesiveness becomes more favorable. Further, in a case where the content thereof is 50% by mass or less, degradation caused by heat, moisture, light, or the like or change of properties such as coloration can be suppressed.

The content of the aromatic vinyl monomer unit is preferably 1 to 3 times with respect to the acid anhydride monomer unit contained in the acid anhydride copolymer (C-1). When the content thereof is 1 or more times, the yield of the polymer is improved, which is economically advantageous. When the content thereof is 3 or less times, the strength of the resin composition becomes favorable, and thus the handleability of a laminate film to be obtained becomes favorable. The content thereof is preferably 2% by mass or more and 98% by mass or less, and more preferably 3% by mass or more and 97% by mass or less.

Examples of the aromatic vinyl monomer include styrenesulfonate such as styrene, sodium styrenesulfonate, or ammonium styrenesulfonate; styrenesulfonic acid ester such as ethyl styrenesulfonate; styrene alkyl ether such as t-butoxystyrene; a styrene derivative such as acetoxystyrene or vinylbenzoic acid; α-methylstyrene; and an α-methylstyrene derivative. They may be used either singly or in combination of two or more kinds.

As other monomers, the same monomers as the monomers used in polymerization of the thermoplastic polymer (A-2) can be used. However, from the viewpoint of compatibility with the acrylic rubber particles (C-2) and adhesiveness with the resin layer (I), an acrylic monomer, particularly, methyl methacrylate is preferable.

The content of the other monomer units is preferably 0% by mass or more and 96% by mass or less, and more preferably 0% by mass or more and 94% by mass or less with respect to the acid anhydride copolymer (C-1). Incidentally, the content thereof may be 0% by mass.

As a method for producing the acid anhydride copolymer (C-1), various polymerization methods such as suspension polymerization, emulsion polymerization, bulk polymerization, and solution polymerization can be used.

Since hydrolysis of acid anhydride occurs at the time of aqueous polymerization such as suspension polymerization or emulsion polymerization, non-aqueous polymerization is preferable. A chain transfer agent, another polymerization aid, and the like may be used at the time of polymerization. The chain transfer agent is not particularly limited, but is preferably mercaptans.

[Acrylic Rubber Particles (C-2)]

The acrylic rubber particles (C-2) are not particularly limited as long as they are acrylic rubber particles other than the acid anhydride copolymer (C-1), and the same acrylic rubber particles as the acrylic rubber particles (A-1) are exemplified.

The average particle diameter of the acrylic rubber particles (C-2) is preferably 0.15 μm or more and 0.5 μm or less, and more preferably 0.2 μm or more and 0.3 μm or less. When the average particle diameter thereof is 0.15 μm or more, the toughness of the resin layer (II) becomes favorable, and handleability of the film and adhesiveness at the time of a lattice pattern peeling-off test become more favorable.

[Additive (D-3)]

As the additive (D-3), the same additive as the additive (D-1) used in preparation of the acrylic resin composition (A) can be used as long as the additive (D-3) is an additive other than (C-1) and (C-2).

The thickness of the laminate film according to the invention is preferably 10 μm or more and 40 μm or less, more preferably 20 μm or more and 38 μm or less, and further preferably 25 μm or more and 35 μm or less. In a case where the thickness thereof is 10 μm or more, the laminate film is easily manufactured, and it is possible to provide sufficient weather resistance to a melamine decorative panel to be obtained.

On the other hand, in a case where the thickness thereof is 40 μm or less, the laminate film has suitable flexibility so that peeling off can be prevented when the melamine decorative panel to be obtained is cut. In addition, there is an economic advantage in terms of mass per unit area. Moreover, film formability is stabilized and thus the laminate film is easily manufactured. Furthermore, in a case where the laminate film is laminated on the melamine decorative panel, the pencil hardness of the decorative panel is increased so as to improve scratch resistance.

In a case where the resin layer (I) is formed from the acrylic resin composition (A), the thickness of the resin layer (I) is preferably 1 μm or more and 39.5 μm or less, more preferably 5 μm or more and 30 μm or less, and further preferably 10 μm or more and 30 μm or less. In a case where the thickness of the resin layer (I) is 1 μm or more, weather resistance and water resistance of a melamine decorative panel to be obtained become favorable. In addition, in a case where the thickness of the resin layer (I) is 39.5 μm or less, there is an economic advantage in terms of mass per unit area.

Further, the thickness of the resin layer (II) is preferably 0.5 μm or more and 9 μm or less, more preferably 2 μm or more and 8 μm or less, and further preferably 3 μm or more and 7 μm or less. In a case where the thickness of the resin layer (II) is 0.5 μm or more, adhesiveness is improved. In a case where the thickness of the resin layer (II) is 9 μm or less, there is an economic advantage in terms of mass per unit area.

In a case where the resin layer (I) is formed from the fluororesin composition (B), the thickness of the resin layer (I) is preferably 1 μm or more and 4 μm or less, more preferably 2 μm or more and 4 μm or less, and further preferably 3 μm or more and 4 μm or less. In a case where the thickness of the resin layer (I) is 1 μm or more, the chemical resistance of a melamine decorative panel to be obtained becomes favorable. In addition, in a case where the thickness of the resin layer (I) is 4 μm or less, there is an economic advantage in terms of mass per unit area. Further, in a case where the thermal shrinkage rates of the resin layer (I) and the resin layer (II) are large, as the thickness of the resin layer (I) is decreased, the curling of the laminate film is suppressed, and thus the laminate film is excellent in handleability.

Further, the thickness of the resin layer (II) is preferably 6 μm or more and 39 μm or less, more preferably 16 μm or more and 36 μm or less, and further preferably 21 μm or more and 32 μm or less. When the thickness of the resin layer (II) is 39 μm or less, there is an economic advantage in terms of mass per unit area. In addition, when the thickness of the resin layer (II) is 6 μm or more, adhesiveness is improved. Further, as the thickness of the resin layer (II) is increased, it is possible to provide weather resistance at a low concentration of an ultraviolet absorbing agent, which is advantageous. That is, in a case where the thickness thereof is in these ranges, it is possible to secure sufficient chemical resistance, adhesiveness, and weather resistance so that a fluororesin-acrylic resin laminate film having a high industrial utility value is obtained.

As a method for manufacturing the laminate film according to the invention, from the viewpoint of productivity, it is preferable to use a method of forming lamination structures of the resin layers (I) and (II) by a co-extrusion method through a feed block die or a multi-manifold die. In addition, it is also possible to use a method in which the resin layers (I) and (II) are formed in a film shape by a melt extrusion method or the like using a T die respectively and the two kinds of films are laminated by a thermal lamination method. Further, it is also possible to use an extrusion lamination method in which one resin layer is formed in a film shape and then the other resin layer is laminated by a melt extrusion method. In the case of performing melt extrusion, in order to remove cores or impurities causing surface defects, the resin composition in a melt state can also be extruded while being filtered with a screen mesh having 200 meshes or more.

Further, from the viewpoint of preventing thermal degradation of the resin composition (C), it is preferable to use a coating method in which a solution containing the resin composition (C) is applied onto the resin layer (I) formed in a film shape to laminate the resin layer (II). For example, there is mentioned a method in which a solution obtained by dissolving the resin composition (C) in a solvent such as an organic solvent is applied onto the resin layer (I) by a printing method such as a gravure printing method, a screen printing method, or an offset printing method, or a coating method such as a blade coating method or a rod coating method, and then heat drying is performed in order to remove the solvent. Incidentally, a solution containing the acrylic resin composition (A) or the fluororesin composition (B) may be applied onto the resin layer (II) formed in a film shape to laminate the resin layer (I).

Examples of the solvent include an alcohol-based solvent such as methanol, ethanol, isopropanol, n-butanol, or ethylene glycol; an aromatic solvent such as xylene, toluene, or benzene; an aliphatic hydrocarbon-based solvent such as hexane or pentane; a halogenated hydrocarbon-based solvent such as chloroform or carbon tetrachloride; a phenol-based solvent such as phenol or cresol; a ketone-based solvent such as methyl ethyl ketone, methyl isobutyl ketone, acetone, or cyclohexanone; an ether-based solvent such as diethylether, methoxytoluene, 1,2-dimethoxyethane, 1,2-dibutoxyethane, 1,1-dimethoxymethane, 1,1-dimethoxyethane, 1,4-dioxane, or tetrahydrofuran (THF); a fatty acid-based solvent such as formic acid, acetic acid, or propionic acid; an acid anhydride-based solvent such as acetic anhydride; an ester-based solvent such as ethyl acetate, n-propyl acetate, butyl acetate, or butyl formate; a nitrogen-containing solvent such as ethylamine, toluidine, dimethyl formamide, or dimethylacetamide; a sulfur-containing solvent such as thiophene or dimethyl sulfoxide; a solvent having two or more kinds of functional group such as diacetone alcohol, 2-methoxyethanol (methyl cellosolve), 2-ethoxyethanol (ethyl cellosolve), 2-butoxyethanol (butyl cellosolve), diethylene glycol, 2-aminoethanol, acetone cyanohydrin, diethanolamine, morpholine, 1-acetoxy-2-ethoxyethane, or 2-acetoxy-1-methoxypropane; and water. Of them, from the viewpoint of solubility, dimethyl formamide and dimethylacetamide are preferable. They may be used either singly or in combination of two or more kinds.

Depending on printability or coatability as a coating material, it is possible to add an additive for improving solution properties, such as an anti-skinning agent, a thickener, an anti-settling agent, an anti-sagging agent, an antifoaming agent, or a leveling agent, to a resin composition. Further, it is possible to add an additive for improving the coating film performance, such as an extender pigment, a light stabilizer, an ultraviolet absorbing agent, an antioxidant, an anti-microbial agent, a mildew proofing agent, or a flame retardant, to a resin composition.

[Protection Film, Melamine Decorative Panel Surface Protection Film, and Melamine Decorative Panel]

The laminate film according to the invention has excellent adhesiveness and can be attached to various base materials. Thus, the laminate film according to the invention can be suitably used as a protection film. In particular, the laminate film according to the invention exhibits excellent adhesiveness to a melamine resin, and thus can be suitably used as a melamine decorative panel surface protection film.

The melamine decorative panel is used in a horizontal surface of a desk, a counter, or the like, or a vertical surface of a wall or the like. The configuration thereof and the manufacturing method therefor are described in detail in Decorative Panel HandBook (Shin-Kenjai Kenkyusho (New Building Material Laboratory), published in Showa 48 (1973)) or the like. The melamine decorative panel is obtained, for example, in such a manner that a melamine resin is impregnated in decorative paper for a decorative panel, the dried melamine resin-impregnated paper and a resin-impregnated core paper serving as a core material layer are laminated, as necessary, a melamine resin-impregnated overlay paper, which is obtained by impregnating a melamine resin in overlay paper and then drying the resultant product, for protecting a pattern of the decorative paper is further laminated and balance paper for suppressing warpage is further laminated at the lowermost layer, and then heat press molding is performed thereon.

As the melamine resin-impregnated paper, for example, a resin-impregnated paper, which is obtained by impregnating a melamine-formaldehyde resin in decorative paper for a decorative panel and then drying the resultant product, can be used. As the resin-impregnated core paper, for example, it is possible to use a core paper for a decorative panel obtained by impregnating a phenol-formaldehyde resin, a melamine-formaldehyde resin, or a slurry, which contains a resin solution containing a mixture of the above-escribed resins as main components and an inorganic filler such as aluminum hydroxide or calcium carbonate, in kraft paper, a nonwoven fabric, a woven fabric, or the like and then drying the resultant product. The heat press molding can be performed, for example, by laminating the resin-impregnated core paper, the melamine resin-impregnated paper (melamine base material), and the laminate film according to the invention under the conditions including a temperature of 110°C or higher and 170°C or lower, a pressure of 5 MPa or more and 10 MPa or less, and a time of 10 minutes or longer and 90 minutes or shorter.

In a case where the laminate film according to the invention is bonded to the melamine base material, it is preferable that thermal fusion bonding is performed while the resin layer (II) formed from the resin composition (C) faces the melamine base material side and is in contact with the melamine base material. According to this method, bonding can be performed without using an adhesive and a pressure-sensitive adhesive. The bonding can be performed continuously or discontinuously, and for example, bonding can be performed by a discontinuous bonding method using a heat press method. Particularly, when the melamine decorative panel is produced, if the melamine base material and the laminate film according to the invention are laminated and then subjected to heat press molding, the laminate film can be laminated at the same time of producing the melamine decorative panel. Thus, the number of processes can be reduced, which is advantageous.

Meanwhile, in a case where the laminate film according to the invention is not used and, for example, a film formed from the resin layer (I) is used, adhesiveness with the melamine base material is low. Thus, it is necessary to use an adhesive or a primer so that costs are increased and productivity is largely decreased. On the other hand, in a case where the laminate film according to the invention is used, it is not necessary to use an adhesive or a primer so that the number of processes can be reduced and costs can be reduced, which is industrially advantageous.

EXAMPLES

Hereinafter, the invention will be described in more detail by means of Examples. However, the invention is not limited to these Examples. The term "part(s)" in Examples represents "part(s) by mass". In addition, abbreviations in Examples are as described below.

MMA: methyl methacrylate
MA: methyl acrylate
BA: butyl acrylate
St: styrene
AMA: allyl methacrylate
BDMA: 1,3-butylene glycol dimethacrylate
CHP: cumene hydroperoxide
t-BH: t-butyl hydroperoxide
n-OM: n-octylmercaptan
RS-610NA: sodium mono-n-dodecyloxytetraoxyethylenephosphate (trade name: "PHOSPHANOL RS-610NA", manufactured by Toho Chemical Industry Co., Ltd.)
LA-31: "ADK STAB LA-31RG" (trade name) manufactured by ADEKA CORPORATION
LA-57: "ADK STAB LA-57" (trade name) manufactured by ADEKA CORPORATION
TV1600: "Tinuvin 1600" (trade name) manufactured by BASF
Irg1076: "Irganox 1076" (trade name) manufactured by BASF
T850: "KF Polymer T#850" (trade name) manufactured by KUREHA CORPORATION
VH: "ACRYPET VH001" (trade name) manufactured by Mitsubishi Rayon Co., Ltd.
SZ15170: "Xiran SZ15170" (trade name) manufactured by Polyscope Polymers BV (maleic anhydride copolymerization amount: 15% by mass, Tg: 131°C)
SZ08250: "Xiran SZ08250" (trade name) manufactured by Polyscope Polymers BV (maleic anhydride copolymerization amount: 8% by mass, Tg: 116°C)
Measurement of various physical properties in Examples was carried out by the following methods.

(1) Glass Transition Temperature (Tg)

The glass transition temperature was calculated by using a value described in Polymer HandBook (J. Brandrup, Interscience, 1989) or a catalog value of a monomer manufacturer from the Fox equation.

(2) Average Particle Diameter

Regarding the average particle diameter of the acrylic rubber particles (A-1), the final particle diameter of a polymer latex of a polymer obtained in emulsion polymerization was measured by using a light scattering photometer (product name: "DLS-700", manufactured by Otsuka Electronics Co., Ltd.) and a dynamic light scattering method.

(3) Total Light Transmittance, Haze Value, Yellowness index, Color Difference, and Whiteness

The total light transmittance was evaluated according to JIS K7361-1, the haze value was evaluated according to JIS K7136, the yellowness index was evaluated according to JIS K7373, the color difference was evaluated according to JIS K5600-4-6, and the whiteness was evaluated according to JIS Z8715.

(4) Melamine Base Material Curing Temperature

An endothermic peak temperature when the melamine base material was heated from 25°C to 200°C at 10°C/min under a nitrogen stream was measured by using DSC 6200 (product name, manufactured by SII Nano Technology Inc.) and then the measured endothermic peak temperature was regarded as a melamine base material curing temperature.

(5) Water Whitening Resistance Evaluation

A boiling test was carried out at 100°C for 2 hours according to CEN (European Committee for Standardization) standards, EN438-2 to measure a change in whiteness before and after the boiling test.

(6) Adhesiveness Evaluation

Cutting of a lattice pattern with 100 sections at an interval of 1 mm was made on the melamine decorative panel in a room temperature state by a cutter knife, and then peeling-off property was checked by using a cellophane tape (manufactured by NICHIBAN CO., LTD.). This test was performed before and after the boiling test. A case where there is no peeled-off section was evaluated as "A", a case where there are 1 or more and 9 or less peeled-off sections was evaluated as "B", and a case where there are 10 or more peeled-off sections was evaluated as "C".

(7) Thicknesses of Resin Layers (I) and (II)

The laminate film was cut into a suitable size and then the thickness of the resin layer (I) or (II) was measured by using a reflectance spectral film thickness meter FE 3000 (trade name, manufactured by Otsuka Electronics Co., Ltd.).

(8) Weather Resistance Evaluation

A test was carried out on the melamine decorative panel by using a superxenon weather meter SX75 (trade name, manufactured by Suga Test Instruments Co., Ltd.) at an irradiation intensity of 60 W/m$^2$ (300 to 400 nm) with a filter #275 in such a manner that irradiation (63°C, 50% RH) for 102 minutes and irradiation + spraying (95% RH) for 18 minutes (120 minutes in total) were regarded as one cycle. The adhesiveness and the color difference change before and after the test were evaluated in the same manner as described above.

(9) Curling Evaluation

The obtained laminate film was cut in a rectangular shape of 20 cm, placed on a flat glass plate while the resin layer (I) was set as the upper surface, and held at 25°C and a humidity of 50% for 6 hours, and the state of the film end portion was observed by visual inspection. A case where the end portion was in contact with the glass surface was designated as "A", a case where the end portion floated from the glass surface was designated as "B", and a case where the end portion was curled to be in contact with the upper surface of the laminate film was designated as "C".

(10) Storage Elastic Modulus Measurement

A resin to be measured was formed into a 50-μm film, and the storage elastic modulus thereof was measured by DMS6100 manufactured by Seiko Instruments Inc. The measurement conditions were set to 100°C and 0.1 Hz.

(11) Pencil Hardness

The pencil hardness was measured according to JIS K-5600-5-4 by using a pencil scratch tester manufactured by Taiyu Kizai Co., Ltd. and "Uni" pencil manufactured by Mitsubishi Pencil Co., Ltd.

(12) Release Property

After the melamine decorative panel was produced, a case where the melamine decorative panel and a stainless plate were naturally peeled off was designated as "A", and a case where the melamine decorative panel and a stainless plate were not naturally peeled off was designated as "B".

(13) Embossing Property

A melamine decorative panel was produced in the same method as described later, except that an embossed press plate (arithmetic average roughness Ra: 5 μm) was used instead of a mirror-surface stainless plate at the time of producing the melamine decorative panel and the pressing condition were set to 100°C for 20 minutes, and then 60° glossiness was measured by a gloss meter GM-60 manufactured by Konica Minolta, Inc.

(14) Chemical Resistance (Acetone)

Acetone was dropped on the surface of the melamine decorative panel. After 1 minute, the surface was wiped with a cloth and then the appearance thereof was observed by visual inspection. A case where there is no trace was designated as "A", a case where trace was slightly observed was designated as "B", and a case where trace was clearly observed and whitening was observed was designated as "C".

(15) Chemical Resistance (Coating Test)

Coating was performed on the surface of the melamine decorative panel by using a coating spray (trade name: Silicone Lacquer Spray Black, manufactured by Kanpe Hapio Co., Ltd.) and then a petri dish was placed for 5 minutes at the coating place while facing down so as to be sealed in order to adjust the drying speed. Thereafter, drying was performed at room temperature for 1 hour or longer. Thereafter, coating was removed by using a wiping spray (KSR-300, manufactured by ABC TRADING CO., LTD.) and then appearance thereof was observed by visual inspection. A case where there is no trace was designated as "A", a case where trace was slightly observed was designated as "B", and a case where trace was clearly observed was designated as "C".

(16) Film Appearance

The obtained film was cut into an A4 size. By using a fish eye counter manufactured by MEC Co., Ltd., fish eyes with a surface area of 0.01 $mm^2$ or more were selected, and those derived from thermal degradation, namely, those not derived from contamination, and in other words, those having no profile among the selected fish eyes were counted by an observation under a microscope. The detection was performed on an area of 0.04 $m^2$, and the counts were converted to the number per 1 $m^2$. A case where the number of fish eyes was less than 100 was designated as "A", a case where the number of fish eyes was 100 or more and less than 500 was designated as "B", and a case where the number of fish eyes was 1,000 or more was designated as "C".

(17) Fracture Elongation

The obtained film was cut in 150 mm × 15 mm with the film formation direction as a long side, a tension test was carried out using Autograph Tension Tester (trade name, manufactured by Shimadzu Cooperation) at an inter-chuck distance of 100 mm and a tension rate of 50 mm/min, and then the fracture elongation of the film was measured.

(18) Gel Fraction

50 ml of acetone was added to 0.5 g of the obtained resin composition (C) and the resultant mixture was stirred at 65°C for 4 hours. Thereafter, centrifugal separation was performed at 4°C and 14,000 rpm for 30 minutes to remove the supernatant, then 50 ml of acetone was added again, and centrifugal separation was performed again under the same conditions. After removing the supernatant, the precipitated gel portion was subjected to vacuum drying for 8 hours, then the weight thereof was measured, and the gel fraction was calculated by the following equation.

$$\text{Gel fraction (\%)} = \text{weight (g) of gel portion}/0.5 \times 100$$

<Production Example 1: Production of Acrylic Rubber Particles (A-1A)>

Under a nitrogen atmosphere, 206 parts of deionized water was put into a reaction container equipped with a reflux condenser and heated to 80°C. Components (i) described below were added thereto, and 1/10 of raw materials (ii) described below (parts of raw materials for the elastic copolymer (a-1)) were incorporated thereinto with stirring and then held for 15 minutes. Then, the remaining raw materials (ii) were continuously added such that the increase rate of the monomer mixture with respect to water became 8% by mass/hr. Thereafter, the mixture was held for 1 hour to perform polymerization, thereby obtaining a polymer latex. Subsequently, 0.2 part of sodium formaldehyde sulfoxylate was added to the polymer latex. Thereafter, the mixture was held for 15 minutes, raw materials (iii) described below (parts of raw materials for the elastic copolymer (a-1)) were continuously added with stirring at 80°C under a nitrogen atmosphere such that the increase rate of the monomer mixture with respect to water became 4% by mass/hr. Thereafter, the mixture was held for 2 hours to perform polymerization, thereby obtaining a latex of the elastic copolymer (a-1).

0.2 part of sodium formaldehyde sulfoxylate was added to this latex of the elastic copolymer (a-1). Thereafter, the mixture was held for 15 minutes, raw materials (iv) described below (raw materials for the rigid polymer (a-2)) were continuously added with stirring at 80°C under a nitrogen atmosphere such that the increase rate of the monomer mixture with respect to water became 10% by mass/hr. Thereafter, the mixture was held for 1 hour to perform polymerization, thereby obtaining a latex of acrylic rubber particles (A-1A). The average particle diameter of the acrylic rubber particles (A-1A) was 0.28 $\mu$m.

This latex of the acrylic rubber particles (A-1A) was filtered by a filter having a mesh of 50 $\mu$m. Subsequently, coagulation using calcium acetate, aggregation, and a solidification reaction were performed thereon, and then the resultant product was filtered, washed with water, and then dried to obtain acrylic rubber particles (A-1A).

(i)

| | |
|---|---|
| Sodium formaldehyde sulfoxylate | 0.4 part |
| Ferrous sulfate | 0.00004 part |
| Disodium ethylenediamine tetraacetate | 0.00012 part |

(ii)

| | |
|---|---|
| MMA | 11.25 parts |
| BA | 12.5 parts |
| St | 1.25 parts |
| AMA | 0.094 part |
| BDMA | 0.75 part |
| t-BH | 0.044 part |
| RS-610NA | 0.75 part |

(iii)

| | |
|---|---|
| BA | 30.9 parts |
| St | 6.6 parts |
| AMA | 0.66 part |
| BDMA | 0.09 part |
| CHP | 0.11 part |
| RS-610NA | 0.6 part |

(iv)

| | |
|---|---|
| MMA | 35.6 parts |
| MA | 1.9 parts |
| n-OM | 0.11 part |
| t-BH | 0.06 part |

<Production Example 2: Production of Acrylic Rubber Particles (A-1B)>

Into a container equipped with a stirrer, 8.5 parts of deionized water was incorporated. After that, raw materials (ii) described below (parts of raw materials for the elastic copolymer (a-1)) were added with stirring and the resultant mixture was stirred for 20 minutes to prepare an emulsion.

Next, 191.5 parts of deionized water and components (i) described below were put into a polymerization container equipped with a condenser, and the temperature was increased to 70°C. Subsequently, the prepared emulsion was added dropwise into the polymerization container over 8 minutes with stirring under nitrogen, and the reaction was continued for 15 minutes.

Subsequently, raw materials (iii) described below (parts of raw materials for the elastic copolymer (a-1)) were added dropwise over 90 minutes in the polymerization container, and then the reaction was continued for 60 minutes to obtain a latex of the elastic copolymer (a-1). Incidentally, Tg of the elastic copolymer (a-1) alone was -48°C.

Subsequently, raw materials (iv) described below were added dropwise over 45 minutes in the polymerization container, and then the reaction was continued for 60 minutes to form the intermediate polymer (a-3) on the elastic copolymer (a-1). Incidentally, Tg of the intermediate polymer (a-3) alone was 20°C.

Subsequently, raw materials (v) described below were added dropwise over 140 minutes in the polymerization container, and then the reaction was continued for 60 minutes to form the rigid polymer (a-2) on the intermediate polymer (a-3). According to the above processes, a latex containing 100 parts of acrylic rubber particles (A-1B) was obtained. Incidentally, Tg of the rigid polymer (a-2) alone was 84°C. Further, the average particle diameter of the acrylic rubber particles (A-1B) measured after the polymerization was 0.12 μm.

This latex of the acrylic rubber particles (A-1B) was filtered by a filter having a mesh of 50 μm. Subsequently, coagulation using calcium acetate, aggregation, and a solidification reaction were performed thereon, and then the resultant product was filtered, washed with water, and then dried to obtain acrylic rubber particles (A-1B).

(i)

| | |
|---|---|
| Sodium formaldehyde sulfoxylate | 0.2 part |
| Ferrous sulfate | 0.0001 part |
| Disodium ethylenediamine tetraacetate | 0.0003 part |

(ii)

| | |
|---|---|
| MMA | 0.3 part |
| BA | 4.5 parts |
| AMA | 0.05 part |
| BDMA | 0.2 part |
| CHP | 0.025 part |
| RS-610NA | 1.1 parts |

(iii)

| | |
|---|---|
| MMA | 1.5 parts |
| BA | 22.5 parts |
| AMA | 0.25 part |
| BDMA | 1.0 part |
| CHP | 0.016 part |

(iv)

| | |
|---|---|
| MMA | 6.0 parts |
| BA | 4.0 parts |
| AMA | 0.075 part |
| CHP | 0.013 part |

(v)

| | |
|---|---|
| MMA | 55.2 parts |
| BA | 4.8 parts |

(continued)

| n-OM | 0.22 part |
| t-BH | 0.075 part |

<Production Example 3: Production of Processing Aid>

200 parts of deionized water was incorporated into a reaction container purged with nitrogen, and 1 part of potassium oleate as an emulsifier and 0.3 part of potassium persulfate were incorporated thereinto. Next, 40 parts of MMA, 10 parts of BA, and 0.005 part of n-OM were incorporated thereinto and the resultant mixture was stirred at 65°C for 3 hours under a nitrogen atmosphere to complete the polymerization. Subsequently, a monomer mixture formed from 48 parts of MMA and 2 parts of BA was added dropwise over 2 hours, and after completion of dropwise addition, was held for 2 hours to complete the polymerization. The obtained latex was added to 0.25% by mass of sulfuric acid aqueous solution, and a polymer was coagulated with acid. Thereafter, dehydrating, washing with water, and drying were performed and then the polymer was recovered in a powder state. The mass average molecular weight of the obtained processing aid was 1,000,000.

<Production Examples 4 to 16: Production of Resin Compositions (A1) to (A4), (B1) to (B3), and (C1) to (C6)>

In Production Example 4, 16 parts of the acrylic rubber particles (A-1A) of Production Example 1, 84 parts of VH, 2 parts of the processing aid of the Production Example 3, 2.1 parts of LA-31, 0.3 part of LA-57, and 0.1 part of Irg1076 were used and mixed with a Henschel mixer. Next, the resultant mixture was melted and kneaded by using a 35-mmϕ twin screw extruder (LID = 26) under the conditions including a cylinder temperature of 200 to 240°C and a die temperature of 240°C to obtain a pellet, thereby obtaining the resin composition (A1).

In Production Examples 5 to 16, resin compositions (A2) to (A4), (B1) to (B3), and (C1) to (C6) were obtained in the same procedures as described above, except that materials as presented in Tables 1 to 3 were used. Incidentally, the content of the acid anhydride group presented in Table 3 is a value calculated from catalog values of SZ15170 and SZ08250.

[Table 1]

| Acrylic resin composition (A) | | Blending [parts] | | | | | | | | | Storage elastic modulus [MPa] |
| | | A-1 | | A-2 | D-1 | | | | | | |
| | | A-1A | A-1B | VH | Processing aid | LA-31 | TV1600 | LA-57 | Irg 1076 | Stearic acid | |
| Production Example 4 | A1 | 16 | - | 84 | 2 | 2.1 | - | 0.3 | 0.1 | - | 600 |
| Production Example 5 | A2 | 16 | - | 84 | 2 | - | 2.1 | 0.3 | 0.1 | - | - |
| Production Example 6 | A3 | 16 | - | 84 | 2 | 2.1 | - | 0.3 | 0.1 | 0.2 | - |
| Production Example 7 | A4 | - | 100 | - | 2 | 2.1 | - | 0.3 | 0.1 | - | 10 |

[Table 2]

| Fluororesin composition (B) | | Blending [parts] | | | Storage elastic modulus [MPa] |
| | | B-1 | B-2 | D-2 | |
| | | T850 | VH | Irg 1076 | |
| Production Example 8 | B1 | 100 | - | - | 570 |
| Production Example 9 | B2 | 90 | 10 | 0.1 | - |
| Production Example 10 | B3 | 68 | 32 | 0.1 | 50 |

[Table 3]

| Resin composition (C) | | Blending [parts] | | | | | | | Tg [°C] | Content of acid anhydride group [%] | Gel fraction [%] |
|---|---|---|---|---|---|---|---|---|---|---|---|
| | | C-1 | | C-2 | | D-3 | | | | | |
| | | SZ15170 | SZ08250 | A-1A | A-1B | LA-31 | LA-57 | Irg 1076 | | | |
| Production Example 11 | C1 | 20 | - | - | 80 | 2.1 | 0.3 | 0.1 | - | 3.0 | 48 |
| Production Example 12 | C2 | 30 | - | - | 70 | 2.1 | 0.3 | 0.1 | 103 | 4.5 | 42 |
| Production Example 13 | C3 | - | 30 | - | 70 | 2.1 | 0.3 | 0.1 | 95 | 2.4 | 42 |
| Production Example 14 | C4 | 70 | - | - | 30 | 2.1 | 0.3 | 0.1 | - | 10.5 | 18 |
| Production Example 15 | C5 | 70 | - | 30 | - | 2.1 | 0.3 | 0.1 | - | 10.5 | 27 |
| Production Example 16 | C6 | 100 | - | - | - | 2.1 | 0.3 | 0.1 | - | 15.0 | 0 |

<Examples 1 to 14: Production of Laminate Film and Melamine Decorative Panel>

In Example 1, the acrylic resin composition (A1) for the resin layer (I) obtained in Production Example 4 and the resin composition (C1) for the resin layer (II) obtained in Production Example 11 were dried at 80°C for a whole day. The C1 was plasticized by a 30-mmφ extruder in which the cylinder temperature was set to 230°C. Further, the acrylic resin composition (A1) was plasticized by a 40-mmφ extruder in which the cylinder temperature was set to 240°C and a screen mesh having 400 meshes was provided. Next, a resin laminate film having a thickness of 50 μm was formed by a feed block die for two kinds and two layers set to 240°C. The thicknesses of the resin layers (I) and (II) were 45 μm and 5 μm, respectively.

Further, the melamine base material was laminated at the resin layer (II) surface side of the laminate film, both surfaces were sandwiched by a mirror-surface stainless plate, and then pressing was performed thereon under the conditions including a temperature of 140°C, a pressure of 4 MPa, and a time of 20 minutes or 10 minutes to thereby produce a melamine decorative panel. The evaluation results of the obtained melamine decorative panel are presented in Tables 4 and 5. The curing temperature of the used melamine base material was 94°C.

[Table 4]

| | Resin layer (I) | | | Resin layer (II) | | | | Total light transmittance | Haze value | Yellowness index | Whiteness | | Curling | Pencil hardness |
|---|---|---|---|---|---|---|---|---|---|---|---|---|---|---|
| | Composition | Storage elastic modulus [MPa] | Thickness [μm] | Composition | Content of acid anhydride group [%] | Gel fraction [%] | Thickness [pm] | | | | Before boiling test | After boiling test | | |
| Example 1 | A1 | 600 | 45 | C1 | 3.0 | 48 | 5 | 91% | 1.4 | 1.4 | 11 | 18 | A | 2H |
| Example 2 | A1 | 600 | 45 | C2 | 4.5 | 42 | 5 | 92% | 2.3 | 2.2 | 11 | 19 | A | 2H |
| Example 3 | A2 | - | 45 | C2 | 4.5 | 42 | 5 | 93% | 1.8 | 1.8 | 11 | 14 | A | - |
| Example 4 | A1 | 600 | 27 | C2 | 4.5 | 42 | 3 | 92% | 1.8 | 1.7 | 11 | 25 | A | 3H |
| Example 5 | A1 | 600 | 45 | C3 | 2.4 | 42 | 5 | 92% | 2.1 | 2.9 | 11 | 20 | A | - |
| Example 6 | A3 | - | 45 | C2 | 4.5 | 42 | 5 | 93% | 1.7 | 1.4 | 11 | 20 | A | 3H |
| Example 7 | A4 | 10 | 45 | C2 | 4.5 | 42 | 5 | 91% | 1.9 | 3.0 | 11 | 23 | A | 5B |
| Example 8 | A1 | 600 | 45 | C4 | 10.5 | 18 | 5 | 91% | 3.1 | 3.9 | 11 | 19 | A | - |
| Example 9 | A1 | 600 | 45 | C5 | 10.5 | 27 | 5 | 90% | 6.3 | 6.9 | 11 | 19 | A | - |
| Example 10 | A1 | 600 | 47 | C2 | 4.5 | 42 | 3 | 92% | 2.1 | 1.7 | 11 | 20 | A | - |
| Example 11 | B1 | 570 | 6 | C2 | 4.5 | 42 | 44 | 92% | 10.8 | 3.8 | 11 | 16 | C | 4B |
| Example 12 | B1 | 570 | 4 | C2 | 4.5 | 42 | 46 | 93% | 6.9 | 3.5 | 11 | 16 | C | 2B |
| Example 13 | B2 | - | 4 | C2 | 4.5 | 42 | 46 | 93% | 4.9 | 2.2 | 11 | 18 | B | B |
| Example 14 | B3 | 50 | 4 | C2 | 4.5 | 42 | 46 | 92% | 2.5 | 6.0 | 11 | 20 | A | HB |
| Comparative Example 1 | - | - | - | C2 | 4.5 | 42 | 50 | 93% | 1.2 | 1.5 | 11 | 30 | A | 4B |
| Comparative Example 2 | A1 | 600 | 45 | C6 | 150 | 0 | 5 | 92% | 1.4 | 1.4 | 11 | 18 | A | 2H |

[Table 5]

| | Adhesiveness (pressing for 20 minutes) | | Adhesiveness (pressing for 10 minutes) | | After weather resistance test | | Release property | Emboss | Chemical resistance | | Film appearance | Fracture elongation |
|---|---|---|---|---|---|---|---|---|---|---|---|---|
| | Before boiling test | After boiling test | Before boiling test | After boiling test | Adhesiveness | Color difference change | | Glossiness | Acetone | Coating test | | |
| Example 1 | A | A | B | C | - | - | B | - | C | C | B | 67% |
| Example 2 | A | A | A | B | A | 4.5 | B | 6.4 | C | C | B | 32% |
| Example 3 | A | A | - | - | - | - | B | - | C | C | B | - |
| Example 4 | A | A | - | - | - | - | B | - | C | C | B | - |
| Example 5 | A | A | A | A | - | - | B | - | C | C | B | - |
| Example 6 | A | A | - | - | - | - | A | - | C | C | B | - |
| Example 7 | A | A | - | - | - | - | B | 2.5 | C | C | B | - |
| Example 8 | A | B | - | - | - | - | B | - | C | C | A | 19% |
| Example 9 | A | A | - | - | - | - | B | - | C | C | A | 31% |
| Example 10 | A | A | - | - | A | 3.9 | B | - | C | C | B | - |
| Example 11 | A | A | - | - | - | - | A | - | A | A | B | - |
| Example 12 | A | A | - | - | - | - | A | - | A | A | B | 60% |
| Example 13 | A | A | - | - | - | - | A | - | B | A | B | - |
| Example 14 | A | A | - | - | A | 4.1 | A | - | C | B | B | - |
| Comparative Example 1 | A | A | A | C | A | 8.4 | C | - | C | C | B | - |
| Comparative Example 2 | B | C | C | C | C | 4.8 | B | - | C | C | A | - |

Further, in Examples 2 to 14, a laminate film and a melamine decorative panel were produced by the same operation as in Example 1, except that materials as presented in Tables 4 and 5 were used and the thicknesses of the resin layers (I) and (II) were set as presented in Tables 4 and 5. The evaluation results of the obtained melamine decorative panel are presented in Tables 4 and 5.

<Comparative Examples 1 and 2>

A laminate film and a melamine decorative panel were produced by the same operation as in Example 1, except that materials as presented in Tables 4 and 5 were used and the thicknesses of the resin layers (I) and (II) were set as presented in Tables 4 and 5. The evaluation results of the obtained melamine decorative panel are presented in Tables 4 and 5. Comparative Example 1 is a single-layered film formed only from the resin layer (II).

From the above Examples and Production Examples, the following matters were clearly found. The laminate films obtained in Examples 1 to 14 were excellent in adhesiveness with the melamine base material, and in the melamine decorative panels using these laminate films, there was no case where 10 or more sections were peeled off in the adhesiveness evaluation.

In Examples 2 to 14 in which the content of the acid anhydride group in the resin layer (II) was 4% by mass or more, even in the case of shortening the pressing time at the time of producing the melamine laminate plate, adhesiveness is exhibited and productivity is excellent.

Further, in Example 3 in which TV1600 that is a triazine-based compound was used as the ultraviolet absorbing agent, an increase in whiteness after the boiling test is suppressed and appearance is excellent.

Further, in Example 4 in which the thickness of the laminate film was set to be less than 40 $\mu$m, the pencil hardness of the melamine laminate plate is improved and scratch resistance is excellent.

Further, in Example 5 in which the Tg of the resin layer (II) was lower than 100°C, even in the case of shortening the pressing time at the time of producing the melamine laminate plate, adhesiveness is exhibited and productivity is excellent.

Further, in Example 6 in which the release agent was added to the resin layer (I), the release property from the press plate at the time of producing the melamine laminate plate is favorable and productivity is excellent.

Further, in Example 7 in which a composition having a storage elastic modulus of 500 MPa or less was used in the resin layer (I), the transferring of the embossed shape is favorable and appearance is excellent.

Further, in Example 9 in which rubber having an average particle diameter of 0.15 $\mu$m or more was contained in the resin layer (II), adhesiveness after the boiling test is improved and durability is excellent.

Further, in Example 10 in which the thickness of the resin layer (II) was set to 3 $\mu$m, the color difference change after the weather resistance test is small and weather resistance is excellent.

Further, in Examples 11 to 14 in which a fluororesin was used in the resin layer (I), chemical resistance is excellent.

Further, in Examples 13 and 14 in which a fluororesin and an acrylic resin were contained in the resin layer (I), curling is suppressed, handleability is excellent, pencil hardness is also improved, and scratch resistance is excellent.

On the other hand, the film obtained in Comparative Example 1 was poor in weather resistance since the resin layer (I) was not included, and was whitened after the weather resistance test. In addition, the laminate film obtained in Comparative Example 2 was insufficient in toughness since the acrylic rubber particles were not contained in the resin layer (II), was peeled off from the melamine laminate plate by the boiling test and the weather resistance test, and was poor in weather resistance and durability.

Hereinbefore, the invention of the present application has been described with reference to the embodiments and examples. However, the invention of the present application is not limited to those embodiments and examples. Various modifications that can be understood by those skilled in the art can be made on configuration and details of the invention of the present application within the scope of the invention of the present application.

INDUSTRIAL APPLICABILITY

According to the invention, it is possible to provide a laminate film which is excellent in bondability, water whitening resistance, and appearance.

**Claims**

1. A laminate film comprising:

   a resin layer (I) which is formed from an acrylic resin composition (A); and

a resin layer (II) which is formed from a resin composition (C) containing an acid anhydride copolymer (C-1) and acrylic rubber particles (C-2).

2. The laminate film according to claim 1, wherein a content of a monomer unit having an acid anhydride structure in the copolymer (C-1) is 4% by mass or more with respect to 100% by mass of the resin composition (C).

3. The laminate film according to claim 1 or 2, wherein a glass transition temperature, as determined in accordance with the description, of the resin composition (C) is 50°C or higher and 105°C or lower.

4. The laminate film according to any one of claims 1 to 3, wherein an average particle diameter, as determined using a light scattering photometer and a dynamic light scattering method, of the acrylic rubber particles (C-2) is 0.15 $\mu$m or more.

5. The laminate film according to any one of claims 1 to 4, wherein a thickness of the laminate film is 40 $\mu$m or less.

6. The laminate film according to any one of claims 1 to 5, wherein the laminate film contains a triazine-based ultraviolet absorbing agent.

7. The laminate film according to any one of claims 1 to 6, wherein the resin layer (I) contains a release agent.

8. The laminate film according to claim 7, wherein the release agent is selected from the group consisting of silicone-based compounds, fluorine-based compounds, alkyl alcohols, and alkylcarboxylic acids.

9. The laminate film according to any one of claims 1 to 8, wherein a storage elastic modulus at 100°C of the resin layer (I), as determined in accordance with the description, is 1 MPa or more and 500 MPa or less.

10. The laminate film according to any one of claims 1 to 9, wherein a gel fraction of the resin layer (II), as determined in accordance with the description, is 5% or more and 30% or less.

11. The laminate film according to any one of claims 1 to 9, wherein a gel fraction of the resin layer (II), as determined in accordance with the description, is 45% or more and 80% or less.

12. The laminate film according to any one of claims 1 to 11, wherein a thickness of the resin layer (II) is 0.5 $\mu$m or more and 4 $\mu$m or less, as determined by cutting the laminate film into a suitable size and then measuring the thickness of the resin layer (II) using a spectral film thickness meter.

13. The laminate film according to any one of claims 1 to 12, wherein the acid anhydride copolymer (C-1) contains 2% by mass or more and 50% by mass or less of a monomer unit having an acid anhydride group, 2% by mass or more and 98% by mass or less of an aromatic vinyl monomer unit, and 0% by mass or more and 96% by mass or less of an other monomer unit, with respect to 100% by mass in total.

14. The laminate film according to any one of claims 1 to 13, wherein the laminate film is manufactured using

(i) a method of forming lamination structures of the resin layers (I) and (II) by a co-extrusion method through a feed block die or a multi-manifold die, or
(ii) a method in which the resin layers (I) and (II) are formed in a film shape by a melt extrusion method using a T die respectively and the two kinds of films are laminated by a thermal lamination method, or
(iii) an extrusion lamination method in which one resin layer (I; II) is formed in a film shape and then the other resin layer (II; I) is laminated by a melt extrusion method, or
(iv) a coating method in which a solution containing the resin composition (C) is applied onto the resin layer (I) formed in a film shape to laminate the resin layer (II).

15. A protection film comprising the laminate film according to any one of claims 1 to 14.

16. A melamine decorative panel surface protection film comprising the laminate film according to any one of claims 1 to 14.

17. A melamine decorative panel comprising the laminate film according to any one of claims 1 to 14 and a melamine base material laminated in order of the resin layer (I), the resin layer (II), and the melamine base material.

## REFERENCES CITED IN THE DESCRIPTION

**Patent documents cited in the description**

- JP 2014238335 A
- JP 2007506574 A
- JP 2009196151 A
- JP 2013231169 A

**Non-patent literature cited in the description**

- Decorative Panel HandBook. Showa. Shin-Kenjai Kenkyusho (New Building Material Laboratory), 1973, vol. 48
- **J. BRANDRUP**. Polymer HandBook. Interscience, 1989